# EUROPÄISCHE PATENTSCHRIFT

(11) **EP 1 913 320 B1**
(45) Veröffentlichungstag und Bekanntmachung des Hinweises auf die Patenterteilung: **22.09.2010**
(21) Anmeldenummer: 06795232.5
(22) Anmeldetag: 11.08.2006
(51) Int. Cl.: F27B 7/20

(54) **VERFAHREN ZUM VORERHITZEN VON ZEMENTROHMEHL SOWIE VORRICHTUNG ZUR DURCHFÜHRUNG DIESES VERFAHRENS**
METHOD FOR PREHEATING CEMENT RAW MEAL, AND METHOD FOR CARRYING OUT SAID METHOD
PROCEDE POUR PRECHAUFFER DE LA FARINE CRUE A CIMENT ET DISPOSITIF PERMETTANT LA MISE EN OEUVRE DUDIT PROCEDE

(30) Priorität: 11.08.2005 AT 13542005
(43) Veröffentlichungstag der Anmeldung: 23.04.2008
(73) Patentinhaber: Holcim Technology Ltd., 8645 Jona (CH)
(72) Erfinder: GASSER, Urs, CH-5235 Rüfenach (CH)
(74) Vertreter: Haffner und Keschmann Patentanwälte OG
(86) Internationale Anmeldenummer: PCT/IB2006/002193
(87) Internationale Veröffentlichungsnummer: WO 2007/017747

(56) Entgegenhaltungen:
- DE-A1- 2 852 754
- US-A- 4 094 626

## Beschreibung

Die Erfindung bezieht sich auf ein Verfahren zum Vorerhitzen von Zementrohmehl für die Zementklinkerherstellung, bei welchem das Zementrohmehl, in wenigstens einem Wärmetauscherstrang mit Zyklonschwebegaswärmetauschern im Gegenstrom zu heißen Gasen zur Aufgabeseite eines Zementklinkerofens gefördert wird sowie auf eine Vorrichtung zur Durchführung dieses Verfahrens.

Bei der Herstellung von Zementklinker aus Zementrohmehl wurde bereits vorgeschlagen, in wenigstens einem vom Abgas eines Drehrohrofens durchströmten Wärmetauscherstrang, und insbesondere in Zyklonschwebegas-Wärmetauschersystemen, eine Vorerhitzung vorzunehmen, in welcher bei entsprechender Temperatur auch eine Vorkalzination erfolgen kann. Die heißen Abgase des Drehrohrofens können auf diese Weise thermisch genutzt werden, wobei die für diese Zwecke üblicherweise eingesetzten Zyklonschwebegaswärmetauscher auf definierte Durchsatzmengen ausgelegt sind. Es ist bekannt, eine Mehrzahl von derartigen Zyklonschwebegaswärmetauschern in Reihe zu schalten, sodaas das heiße Prozessgas, welches den Drehrohrofen bei Temperaturen von etwa 1100° C verlässt, in mehreren Stufen auf Temperaturen von 350° C oder sogar bis 290° C in Abhängigkeit von der Anzahl der Stufen herabgekühlt wird. Die Anzahl der Stufen ist wiederum im Wesentlichen von den Trocknungserfordernissen des jeweils eingesetzten Materials abhängig, wobei die Effizienz des Wärmeübergangs im Wesentlichen von der Rohmehldispersion im Gasfluss und einem entsprechend hohen Auftrennungsgrad im Zyklon bestimmt ist. Sowohl der Temperaturgradient als auch ggf. Strahlungsverluste und die jeweils wirksame Kontaktzeit haben einen natürlichen Einfluss auf den Wärmeübergang.

Bei großen Drehrohröfen bzw. entsprechend hoher Produktionsleistung werden entsprechend größere Vorerhitzer benötigt, um die kontinuierliche Beschickung des Drehrohrofens sicherzustellen. Zu diesem Zweck wurde bereits vorgeschlagen, zwei Wärmetauscherstränge parallel zu betreiben, um über entsprechende Schurren die Aufgabe des Materials in den Drehrohrofen sicherzustellen. Bei weiterer Steigerung der geforderten Durchsatzmenge führt ein derartiges Konzept aber notwendigerweise zu natürlichen Grenzen. Während übliche Schwebegaswärmetauscherstränge auf einen Durchsatz von 3500 bis 4000 Tonnen pro Tag ausgelegt sind und mit bewährten Zyklonen mit einer entsprechend hohen Separation und einem entsprechend geringen Druckverlust betrieben werden können, führt eine massive Parallelschaltung derartiger Einrichtungen zu Problemen mit dem erforderlichen Platzbedarf am Aufgabeende des Drehrohrofens. Bei mehr als zwei derartigen Strängen ergibt sich nämlich logistisch eine Komplikation am Aufgabenende des Drehrohrofens, da zusätzlich zu den mehr als zwei Aufgabeschurren weitere Aufgabeschurren für den Anfahrbetrieb des Klinkerofens erforderlich sind, welche auch an dieser Stelle angeschlossen sind. Wenn somit höhere Durchsatzmengen gefordert werden, hätte dies notwendigerweise zur Folge, dass entsprechend größer dimensionierte Schwebegaswärmetauscher, und insbesondere größere Zyklone mit Durchmessern von 12 Metern oder mehr, zum Einsatz gelangen müssten, wobei die Vergrößerung notwendig ist, um die Druckverluste für einen wirtschaftlichen Betrieb in Grenzen zu halten. Derartig große Wärmetauscherstufen sind jedoch in ihrer Betriebsweise nicht so stabil wie solche von bewährten Standardgrößen, wie sie bisher verwendet wurden. Eine entsprechende Vergrößerung der Anzahl der parallel zueinander betriebenen Wärmetauscherstränge führt aber zu den bereits eingangs erwähnten Problemen beim Design für die Aufgabeschurren und dies insbesondere deshalb, weil die Aufgabe für eine kontinuierliche und korrekte Funktion jeweils unter bestimmten winkeln erfolgen muss, um das Abfließen des Materials in den Drehrohrofen sicherzustellen.

Die DE 28 52 754 zeigt und beschreibt ein Verfahren zum Vorerhitzen von Zementrohmehl für die Zementklinkerherstellung, bei welchem das Zementrohmehl in wenigstens einem Wärmetauscherstrang im Gegenstrom zu heißen Gase zur Aufgabenseite eines Zementklinkerofens gefördert wird.

Die Erfindung zielt nun darauf ab, die Durchsatzmenge des Wärmetauschers zu erhöhen, ohne dass hierbei eine höherer Druckverlust und damit ein höherer Energieverbrauch auftritt, wobei gleichzeitig die Trennungseigenschaften der bekannten Einrichtungen möglichst unverändert erhalten bleiben sollen. Zur Lösung dieser Aufgabe besteht das erfindungsgemäße Verfahren ausgehend von dem eingangs genannten Verfahren im Wesentlichen darin, dass die heißen Gase über zwei erste mit dem Aufgabenende des Zementklinkerofens verbundene Wärmetauscher und an diese zwei ersten Wärmetauscher anschließend jeweils zwei zueinander parallel angeordnete Wärmetauscherstränge abgezogen werden, wobei die beiden ersten Wärmetauscher ein größeres Volumen als die in Strömungsrichtung der heißen Gase nachfolgenden Wärmetauscher aufweisen. Dadurch, dass im Anschluss an zwei erste mit dem Aufgabenende des Zementklinkerofens verbundene Wärmetauscher eine Aufspaltung in anschließende, zueinander parallel angeordnete Wärmetauscherstränge erfolgt, gelingt es, die einzelnen Stränge mit im Wesentlichen gleichem Druckverlust zu betreiben und die Anzahl der Aufgabeschurren am Aufgabenende des Drehrohrofens entsprechend zu verringern. Eine Verdopplung der Stränge im Anschluss an die ersten Wärmetauscher erlaubt es, die entsprechende Durchsatzmenge bei im Wesentlichen gleichdimensionierten Wärmetauschern in den einzelnen Strängen zu verdoppeln, ohne dass es hierbei zu komplizierten Konstruktionsproblemen am Aufgabenende des Drehrohrofens kommt. Mit vorteil wird das Verfahren in diesem Fall aber so durchgeführt, dass die heißen Gase durch Zyklonschwebegaswärmetauscherstränge abgezogen werden, bei welchen der jeweils erste Zyklonschwebegaswärmetauscher ein gegenüber den Wärmetauscher der nachfolgenden Zyklonschwebegaswärmetauscherstränge größeres Volumen aufweist, wodurch sichergestellt wird, dass die von den parallel zueinander angeordneten Wärmetauschersträngen zugeführten Rohmehlströme auch in der ersten Stufe sicher verarbeitet und ohne Unterbrechung weitergeleitet werden können.

Die erfindungsgemäße Vorrichtung zum Vorerhitzen von Zementrohmehl für die Zementklinkerherstellung mit wenigstens einem von Zyklonschwebegaswärmetauschern gebildeten Wärmetauscherstrang für die Aufgabe von Zementrohmehl im Gegenstrom zu durch den Wärmetauscherstrang abgezogenen heißen Gasen ist im wesentlichen **dadurch gekennzeichnet, dass** an wenigstens zwei erste mit dem Aufgabenende des Zementklinkerofens verbundene Wärmetauscher jeweils zwei zueinander parallel angeordnete Wärmetauscherstränge angeschlossen sind, wobei die beiden ersten Wärmetauscher ein größeres Volumen als die in Strömungsrichtung der heißen Gase nachfolgenden Wärmetauscher aufweisen. Eine derartige Konstruktion erlaubt es, die Gesamthöhe des Vorerhitzers entsprechend gering zu halten und einheitlich Wärmetauscher einzusetzen, welche sich durch Standardisierung und entsprechende Zuverlässigkeit ausgezeichnet haben. Die einzige konstruktive Modifikation kann sich bei einer derartigen Vorrichtung im Wesentlichen darauf beschränken, dass der erste Wärmetauscher ein größeres Volumen als die in Strömungsrichtung der heißen Gase nachfolgenden Wärmetauscher aufweist. Die Konstruktion der Aufgabeschurre und des Aufgabenendes des Drehrohrofens muss hierbei nicht modifiziert werden, sodass auch hier auf bewährte Konstruktionen zurückgegriffen werden kann. Der mit der Vergrößerung des ersten Wärmetauschers einhergehende geringfügig höhere Druckabfall kann durch die nachfolgenden parallel angeordneten Wärmetauscherstränge entsprechend kompensiert werden, wobei mit Vorteil die erfindungsgemäße Ausbildung so getroffen ist, dass die Wärmetauscher als Zyklonschwebegaswärmetauscher ausgebildet sind.

Um die eingangs genannten Probleme bei der Konstruktion der Aufgabeschurren zu vermeiden ist die Ausbildung mit Vorteil so getroffen, dass maximal zwei Zyklone an die Aufgabeschurre für den Vorkalzinierer und/oder den Klinkerofen angeschlossen sind, wobei vorzugsweise die an die Aufgabeschurre des Klinkerofens angeschlossenen zyklone einen größeren Durchmesser als die nach der Verzweigung in Strömungerichtung der abgezogenen heißen Gase nachfolgenden Zyklone aufweisen.

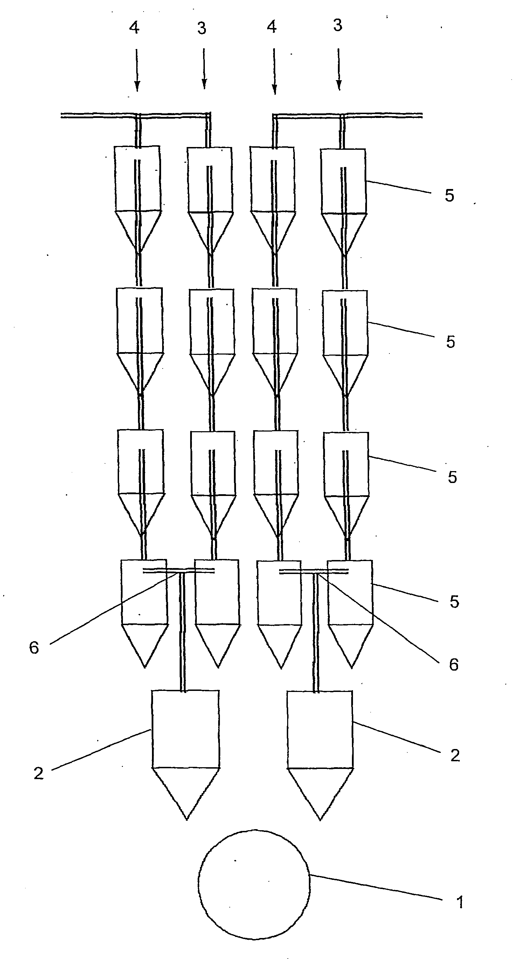

Die Erfindung wird nachfolgend anhand eines in der Zeichnung schematisch dargestellten Ausführungsbeispiels näher erläutert. Die Zeichnung zeigt schematisch einen Drehrohrofen 1, an welchen zwei Zyklonschwebegaswärmetauscher 2 angeschlossen sind. Diese beiden ersten Zyklonschwebegaswärmetauscher sind jeweils mit zwei Strängen 3 bzw. 4 von Standardzyklonschwebegaswärmegastauschern 5 verbunden, wobei oberhalb der Zyklonschwebegaswärmetauscher 2 eine entsprechende Verzweigung, welche schematisch mit 6 angedeutet ist, vorgesehen ist. Die einzelnen Zyklonschwebegaswärmetauscher 5 können die bewährte Dimensionierung und Konstruktion aufweisen, wobei insgesamt durch die Verdoppelung der Stränge die Gesamtbauhöhe entsprechend verringert werden und durch eine geeignete Wahl der entsprechenden Anzahl von Stufen der Energieverbrauch minimiert werden kann.

## Patentansprüche

1. Verfahren zum Vorerhitzen von Zementrohmehl für die Zementklinkerherstellung, bei welchem das Zementrohmehl in wenigstens einem Wärmetauecherstrang mit Zyklonschwebegaswärmetauschern im Gegenstrom zu heißen Gasen zur Aufgabeseite eines Zementklinkerofens (1) gefördert wird, **dadurch gekennzeichnet, dass** die heißen Gase über zwei erste mit dem Aufgabenende des Zementklinkerofens (1) verbundene Wärmetauscher (2) und an diese zwei ersten Wärmetauscher (2) anschließend jeweils zwei zueinander parallel angeordnete Wärmetauscherstränge (3,4) abgezogen werden, wobei die beiden ersten Wärmetauscher (2) ein größeres Volumen als die in Strömungsrichtung der heißen Gase nachfolgenden Wärmetauscher (5) aufweisen.

2. Vorrichtung zum Vorerhitzen von Zementrohmehl für die Zementklinkerherstellung mit wenigstens einem von Zyklonschwebegaswärmetauschern gebildeten Wärmetauscherstrang (3,4) für die Aufgabe von Zementrohmehl im Gegenstrom zu durch den Wärmetauscherstrang (3,4) abgezogenen heißen Gasen, **dadurch gekennzeichnet, dass** an wenigstens zwei erste mit dem Aufgabenende des Zementklinkerofens verbundene Wärmetauscher (2) jeweils zwei zueinander parallel angeordnete Wärmetauscherstränge (3,4) angeschlossen sind, wobei die beiden ersten Wärmetauscher (2) ein größeres Volumen als die in Strömungsrichtung der heißen Gase nachfolgenden Wärmetauscher (5) aufweisen.

3. Vorrichtung nach Anspruch 2, **dadurch gekennzeichnet, dass** die zwei ersten Zyklonschwebegaswärmetauscher (2) an die Aufgabeschurre für den Vorkalzinierer und/oder den Klinkerofen angeschlossen sind, an welche jeweils zwei Zyklonschwebegaswärmetauscherstränge (3,4) angeschlossen sind.

4. Vorrichtung nach Anspruch 2 oder 3, **dadurch gekennzeichnet, dass** die an die Aufgabeschurre des Klinkerofens angeschlossenen zyklone (2) einen größeren Durchmesser als die nach der Verzweigung in strömungsrichtung der abgezogenen heißen Gase nachfolgenden Zyklone (5) aufweisen.

## Claims

1. Method for the preheating of cement raw meal for the production of cement-clinker, in which the cement raw meal is conveyed towards the feed side of a cement clinker kiln (1) in at least one heat exchanger-line having cyclone/fluidized bed-heat exchangers in counter flow to hot gases, **characterized in that** the hot gases are drawn off via two first heat exchangers (2) connected to the feed end of the cement clinker kiln (1) and following these two first heat exchangers (2) via two heat exchanger-lines (3,4) being parallel to each other, in which the two first heat exchangers (2) have a greater volume as compared to the heat exchangers (5) following in the direction of flow of the hot gases.

2. Device for the preheating of cement raw meal for the production of cement clinker having at least one heat exchanger-line (3,4) formed by cyclone/fluidized bed-heat exchangers for feeding cement raw meal in counter current to hot gases drawn of through the heat exchanger-line (3,4), **characterized in that** two heat exchanger-lines (3,4) arranged in parallel to each other are in each case connected to at least two first heat exchangers (2) connected to the feed end of the cement clinker kiln, in which the two first heat exchangers (2) have a greater volume as compared to the heat exchangers (5) following in the direction of flow of the hot gases.

3. Device according to claim 2, **characterized in that** the two first cyclone/fluidized bed heat exchangers (2) are connected to the feeding chute for the precalciner and/or the clinker kiln, to which two cyclone/fluidized bed-heat exchanger lines (3,4) are connected in each case.

4. Device according to claim 2 or 3, **characterized in that** the cyclones (2) connected to the feeding chute of the clinker kiln have a greater diameter than the cyclones (5) following the branching in the flow direction of the hot gases being drawn off.

## Revendications

1. Procédé pour préchauffer de la farine crue à ciment pour la fabrication de clinker de ciment, dans lequel la farine crue à ciment est acheminée, dans au moins une ligne d'échangeurs de chaleur équipée de dispositifs de préchauffage à cyclones par mise en suspension dans les gaz, à contre-courant de gaz chauds jusqu'au côté chargement d'un four à clinker de ciment (1), **caractérisé en ce que** les gaz chauds sont évacués par l'intermédiaire de deux premiers échangeurs de chaleur (2) reliés à l'extrémité de chargement du four à clinker de ciment (1) et de respectivement deux lignes d'échangeurs de chaleur (3, 4) parallèles cotre elles, raccordées à ces deux premiers échangeurs de chaleur (2), les deux premiers échangeurs de chaleur (2) présentant un volume plus important que les échangeurs de chaleur (5) placés en aval dans la direction d'écoulement des gaz chauds.

2. Dispositif pour préchauffer de la farine crue à ciment pour la fabrication de clinker de ciment, comprenant au moins une ligne d'échangeurs de chaleur (3, 4) constituée de dispositifs de préchauffage à cyclones par mise en suspension dans les gaz pour le chargement de farine crue à ciment à contre-courant de gaz chauds évacués par la ligne d'échangeurs de chaleur (3, 4), **caractérisé en ce que** deux lignes d'échangeurs de chaleur (3, 4) parallèles entre elles sont raccordées respectivement à au moins deux premiers échangeurs de chaleur (2) reliés à l'extrémité de chargement du four à clinker de ciment, les deux premiers échangeurs de chaleur (2) présentant un volume plus important que les échangeurs de chaleur (5) placés en aval dans la direction d'écoulement des gaz chauds.

3. Dispositif selon la revendication 2, **caractérisé en ce que** les deux premiers dispositifs (2) de préchauffage à cyclones par mise en suspension dans les gaz sont raccordés à la goulotte de chargement du précalcinateur et/ou du four à clinker, auxquels sont raccordées respectivement deux lignes de dispositifs (3, 4) de préchauffage à cyclones par mise en suspension dans les gaz.

4. Dispositif selon la revendication 2 ou 3, **caractérisé en ce que** les cyclones (2) raccordés à la goulotte de chargement du four à clinker ont un plus grand diamètre que les cyclones (5) placés en aval après la dérivation dans la direction d'écoulement des gaz chauds évacués.
